# EUROPÄISCHE PATENTSCHRIFT

(11) **EP 3 575 127 B1**
(45) Veröffentlichungstag und Bekanntmachung des Hinweises auf die Patenterteilung: **14.06.2023**
(21) Anmeldenummer: 18174730.4
(22) Anmeldetag: 29.05.2018
(51) Int. Cl.: B60L 3/04, B60L 9/00

(54) **ANTRIEBSSYSTEM FÜR EIN SCHIENENFAHRZEUG MIT EINER TRAFOSEKUNDÄRSEITIGEN KURZSCHLUSSSCHUTZVORRICHTUNG**
DRIVE SYSTEM FOR A RAIL VEHICLE WITH A SECONDARY TRANSFORMER-SIDE SHORT-CIRCUIT PROTECTION DEVICE
SYSTÈME D'ENTRAÎNEMENT POUR UN VÉHICULE FERROVIAIRE DOTÉ D'UN DISPOSITIF DE PROTECTION CONTRE LES COURTS-CIRCUITS CÔTÉ SECONDAIRE DU TRANSFORMATEUR

(43) Veröffentlichungstag der Anmeldung: 04.12.2019
(73) Patentinhaber: Siemens Mobility GmbH, 81739 München (DE)
(72) Erfinder: Bakran, Mark-Matthias, 91052 Erlangen (DE); Böhmer, Jürgen, 90547 Stein (DE); Helsper, Martin, 90584 Allersberg (DE); Krafft, Eberhard Ulrich, 90419 Nürnberg (DE); Laska, Bernd, 91074 Herzogenaurach (DE); Nagel, Andreas, 90431 Nürnberg (DE); Schönewolf, Stefan Hans Werner, 90489 Nürnberg (DE); Weigel, Jan, 91077 Großenbuch (DE)
(74) Vertreter: Siemens Patent Attorneys

(56) Entgegenhaltungen:
- EP-A1- 2 075 907
- WO-A1-2017/005863
- FR-A1- 2 996 372
- Anonymous: "Snubber - Wikipedia", , 27. November 2018 (2018-11-27), XP055528053, Gefunden im Internet: URL:https://de.wikipedia.org/wiki/Snubber [gefunden am 2018-11-28]

## Beschreibung

Die Erfindung betrifft ein Antriebssystem für ein Schienenfahrzeug, wobei das Antriebssystem einen Transformator und einen netzseitigen Stromrichter mit Halbleitern und einem Zwischenkreis aufweist. Die Erfindung betrifft weiter ein Schienenfahrzeug mit einem derartigen Antriebssystem. Ferner betrifft die Erfindung ein Verfahren zum Schutz eines derartigen Antriebssystems.

Bei der Reduktion von Streuinduktivitäten in Transformatoren, insbesondere bei der Anwendung in einem Schienenfahrzeug, muss ein besonderes Augenmerk auf den Schutz sensitiver Komponenten gelegt werden. Die Streuinduktivität im Transformator begrenzt den Stromanstieg im Fehlerfall. Durch die Reduktion der Streuinduktivität, beispielsweise zur Optimierung des gesamten Antriebssystems, nimmt auch die schützende Wirkung des Transformators ab.

Die Verlustleistung von einem Antriebssystem eines Schienenfahrzeugs, das für den Betrieb mit einer AC Fahrdrahtspannung, d.h. eine Fahrleitung mit Wechselspannung, ausgelegt ist, hängt wesentlich vom Wirkungsgrad der Traktionstransformators, auch vereinfacht als Transformator bezeichnet, ab. Der Wirkungsgrad des Transformators wird bei Netzfrequenzen von 50 Hz und bei 16 2/3 Hz durch die Kupferverluste bestimmt. Nach dem Stand der Technik werden zur Begrenzung von Störströmen hohe Kurzschlussspannungen, d.h. hohe Streuinduktivitäten, der Transformatoren vorgesehen.

Dokument EP 2 075 907 A1 offenbart einen Stromrichter für ein Schienenfahrzeug zur Versorgung von Synchronmotoren. Ein versorgungsseitig angeordneter steuerbarer Schalter ist in Reihe zwischen einer Sekundärwicklung des Transformators und Eingängen des Stromrichters geschaltet. Dokument FR 2 996 372 A1 offenbart ein kontaktloses Ladesystem für die Batterie eines Kraftfahrzeugs, mit einem ersten induktiven Stromkreis am Boden und einem zweiten induktiven Stromkreis im Fahrzeug, welche elektromagnetisch miteinander gekoppelt sind. Der zweite induktive Stromkreis ist mit der Batterie über eine Gleichrichterbrücke sowie zwei Relais verbunden. Parallel zu zwei Dioden der Diodenbrücke ist ein jeweiliger steuerbarer Unterbrecher geschaltet. Bei einer elektrischen Störung des Fahrzeugs wird die Batterie mittels der beiden Relais von der Diodenbrücke getrennt, was zu einem starken Spannungsanstieg an den Anschlüssen der Steuer-Kapazität führt. Sofern diese Spannung einen bestimmten Auslösewert erreicht, werden die beiden Unterbrecher geschlossen, wodurch die Dioden und damit der zweite induktive Stromkreis kurzgeschlossen werden.

Der Erfindung liegt die Aufgabe zugrunde, das Antriebssystem eines Schienenfahrzeugs zu verbessern.

Diese Aufgabe wird durch ein Antriebssystem für ein Schienenfahrzeug gelöst, wobei das Antriebssystem einen Transformator, einen netzseitigen Stromrichter mit Halbleitern und einem Zwischenkreis und eine Kurzschlussschutzvorrichtung aufweist, wobei die Kurzschlussschutzvorrichtung zwischen einer Sekundärseite des Transformators und dem netzseitigen Stromrichter angeordnet ist, wobei mittels der Kurzschlussschutzvorrichtung ein Kurzschlussstrom durch die Halbleiter des netzseitigen Stromrichters begrenzbar ist.

Weiter wird die Aufgabe durch ein Schienenfahrzeug mit einem derartigen Antriebssystem gelöst, wobei das Schienenfahrzeug für den Betrieb an einer Fahrleitung mit Wechselspannung ausgebildet ist. Ferner wird die Aufgabe durch ein Verfahren zum Schutz eines derartigen Antriebssystems oder eines derartigen Schienenfahrzeugs gelöst, welches dadurch gekennzeichnet ist, dass im Fehlerfall mittels der Kurzschlussschutzvorrichtung ein Kurzschlussstrom durch die Halbleiter des netzseitigen Stromrichters begrenzt wird.

Weitere vorteilhafte Ausgestaltungen der Erfindung sind in den abhängigen Ansprüchen angegeben.

Der Erfindung liegt die Erkenntnis zugrunde, dass sich der Gesamtwirkungsgrad eines Schienenfahrzeugs, dass für den Betrieb an einer Fahrleitung mit Wechselspannung ausgebildet ist, dadurch verbessern lässt, dass die Streuinduktivität des Transformators reduziert wird. Damit sinken die Kupferverluste und es steigt der Wirkungsgrad. Dies führt zu einem geringeren Energieverbrauch des Schienenfahrzeugs. Um das Antriebssystem vor Beschädigung oder Zerstörung auch bei geringer Streuinduktivität zu schützen, ist die Kurzschlussschutzvorrichtung vorhanden. Durch diese werden Kurzschlussstrome durch die Halbleiter des netzseitigen Stromrichters vermieden oder auf ein zulässiges Maß reduziert.

Die Kurzschlussschutzvorrichtung bietet damit den Freiheitsgrad, die Kurzschlussspannung des Transformators teilweise sogar erheblich zu reduzieren. Daraus ergibt sich in der Auslegung des Antriebssystems die Aufgabenstellung, im Fehlerfall (Kurzschluss im Zwischenkreis) hohe Kurzschlussströme in dem netzseitigen Stromrichter, Transformator und anderen Komponenten im Kurzschlusspfad beherrschen zu müssen. Insbesondere die Halbleiter im netzseitigen Stromrichter stellen hierbei eine kritische Begrenzung dar.

Für die Realisierung eines verlustarmen Antriebssystems, das für den Betrieb an einem Fahrleitung mit Wechselspannung vorgesehen ist, ist es deshalb zur Erreichung niedriger Kurzschlussspannungswerte und Streuinduktivitäten vorteilhaft, den Schutz vor Überlastung durch Kurzschlussströmen durch die Kurzschlussschutzvorrichtung sicherzustellen.

Durch diese Kurzschlussschutzvorrichtung ist beispielsweise die Reduktion der Streuinduktivität und damit der Kurzschlussspannung uₖ des Transformators auf einen Wert im Bereich von 10% bis 30% möglich.

Bei einer vorteilhaften Ausgestaltung der Erfindung weisen die Halbleiter des netzseitigen Stromrichters Siliziumcarbid oder Galliumnitrit auf. Gerade diese Halbleiter eignen sich aufgrund ihrer hohen zulässigen Schaltfrequenz im besonderen Maße für den netzseitigen Stromrichter, da sich mit ihnen Störströme auf einfache Weise vermeiden lassen oder nur in Frequenzbereichen entstehen, die für den Betrieb des Schienenfahrzeugs unkritisch sind. Da diese Bauelemente jedoch Prinzip bedingt nur eine geringe Kurzschlussbelastung zulassen, ist das Antriebssystem mit einer Kurzschlussschutzvorrichtung besonders geeignet, die Vorteile des Störstromverhaltens und des hohen Wirkungsgrades gleichzeitig nutzen zu können.

Kennzeichnend ist die Kurzschlussschutzvorrichtung parallel zu der Sekundärseite des Transformators und dem netzseitigen Stromrichter angeordnet, wobei im Kurzschlussfall durch die Kurzschlussschutzvorrichtung die wechselspannungsseitigen Eingänge des netzseitigen Stromrichters kurzschließbar sind. Durch das Kurzschließen der wechselspannungsseitigen Eingangsklemmen des netzseitigen Stromrichters ist der netzseitige Stromrichter spannungsfrei und es können sich in seinem Inneren keine nennenswerten Ströme mehr ausbilden. Damit werden der netzseitige Stromrichter und die darin befindlichen Halbleiter zuverlässig vor Beschädigung geschützt.

Im Folgenden wird die Erfindung anhand der in den Figuren dargestellten Ausführungsbeispiele näher beschrieben und erläutert. Es zeigen:
- FIG 1: ein bekanntes Antriebssystem,
- FIG 2, FIG 3: jeweils ein Ausführungsbeispiel eines Antriebssystems mit einer Kurzschlussschutzvorrichtung,
- FIG 4: ein Bypassschalter
- FIG 5, FIG 6: Steuermöglichkeiten des Antriebssystems mit Kurzschlussschutzvorrichtung und
- FIG 7: ein Schienenfahrzeug.

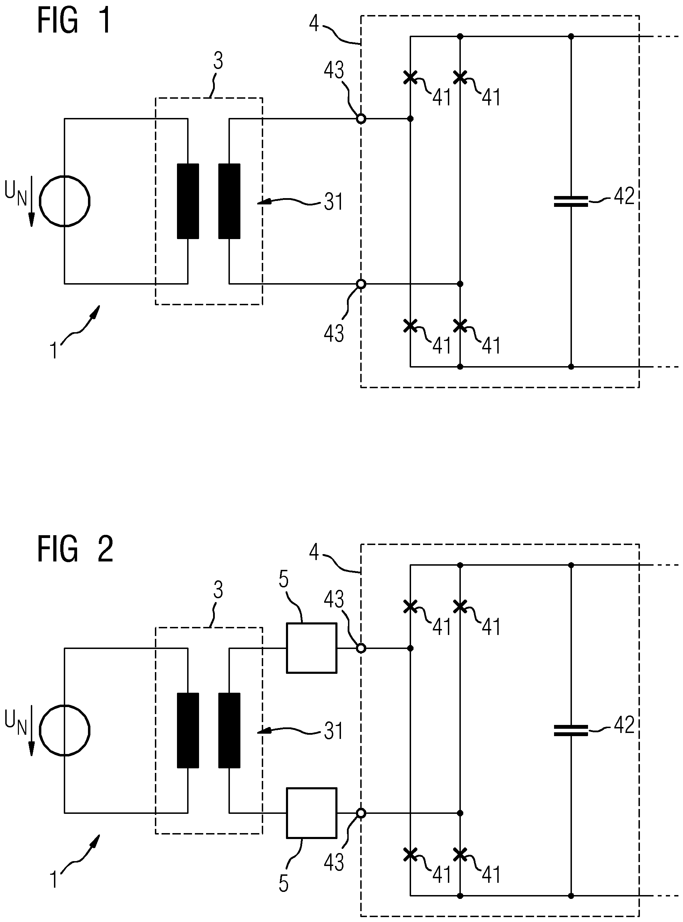

Die FIG 1 zeigt ein bekanntes Antriebssystem 1 mit einem Transformator 3 und einem Netzseitigen Stromrichter 4. Der netzseitige Stromrichter weist Halbleiter 41 auf, mit denen die Spannung am Zwischenkreiskondensator 42 geregelt werden kann. Mit den wechselspannungsseitigen Eingängen 43 ist der netzseitige Stromrichter 4 mit der Sekundärseite 31 des Transformators 3 verbunden. Stromabnehmer und Fahrleitung sind in dieser Figur vereinfacht als Spannungsquelle mit der Netzspannung U_{N} dargestellt. Üblicherweise schließt sich am Zwischenkreis des netzseitigen Stromrichters 4 ein Pulswechselrichter an, mit denen die Motoren des Schienenfahrzeugs angetrieben werden.

Die FIG 2 zeigt ein Ausführungsbeispiel eines Antriebssystems 1 mit einer nicht erfindungsgemäßen Kurzschlussschutzvorrichtung 5. Zur Vermeidung von Wiederholungen wird auf die Beschreibung zur FIG 1 und auf die dort eingeführten Bezugszeichen verwiesen. In Reihe zur Sekundärseite 31 des Transformators 3 sind in diesem Ausführungsbeispiel zwei Kurzschlussschutzvorrichtungen 5 angeordnet. Auch die Verwendung von nur einer Kurzschlussschutzvorrichtung 5 kann bereits entstehende Kurzschlussströme reduzieren. Durch das Einbringen einer Gegenspannung in die Masche, die aus Sekundärseite 31 des Transformators 3, des netzseitigen Stromrichters 4 und der Kurschlussschutzvorrichtungen gebildet wird, kann die Spannung an den wechselspannungsseitigen Eingängen 43 des netzseitigen Stromrichters derart reduziert werden, dass sich die Kurzschlussströme durch die Halbleiter 41 des netzseitigen Stromrichters 4 deutlich verringern, bzw. sogar zu null werden.

Das hier dargestellte Ausführungsbeispiel reduziert durch Einschalten einer Gegenspannung in den Kurzschlusspfad den Kurzschlussstrom. Die Gegenspannung kann dabei durch einen Kondensator erzeugt werden, der sich durch den Kurzschlussstrom auf einen Spannungswert auflädt, der auf Werte ansteigt, die höher als die transformierte Netzspannung sind. Eine weitere Ausführungsform begrenzt den Kurzschlussstrom durch einen Kondensator und ein Überspannungsbegrenzungselement (z.B. ein Bremssteller mit Widerstand). Die Kombination Kondensator und Überspannungsbegrenzungselement bietet die Möglichkeit, den Kondensator mit kleiner Kapazität auszuführen und führt zu einem raschen Aufbau der Gegenspannung. Zur Überspannungsbegrenzung können auch Varistoren, Varistoren kombiniert mit Funkenstrecken oder Halbleiter im Avalanchebetrieb eingesetzt werden.

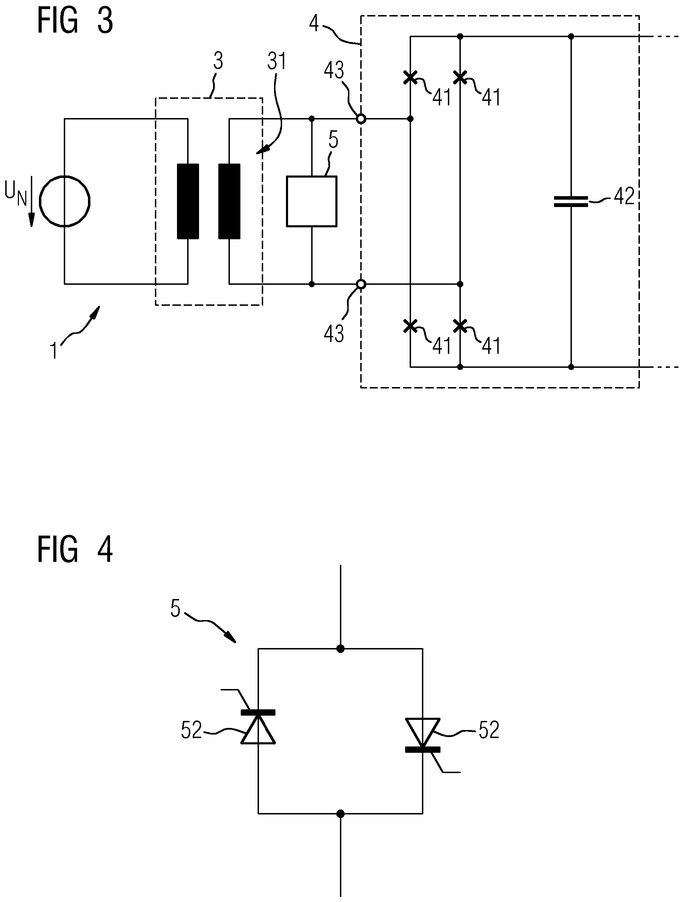

Die FIG 3 zeigt ein Ausführungsbeispiel eines Antriebssystems 1 mit einer Kurzschlussschutzvorrichtung 5. Zur Vermeidung von Wiederholungen wird auf die Beschreibung zu FIG 1 und FIG 2 und auf die dort eingeführten Bezugszeichen verwiesen. Das Kurzschließen der wechselspannungsseitigen Eingänge 43 des netzseitigen Stromrichters 4 übernimmt dabei ein Bypassschalter, kurz Bypass. Somit weist die Kurzschlussschutzvorrichtung 5 diesen Bypassschalter auf.

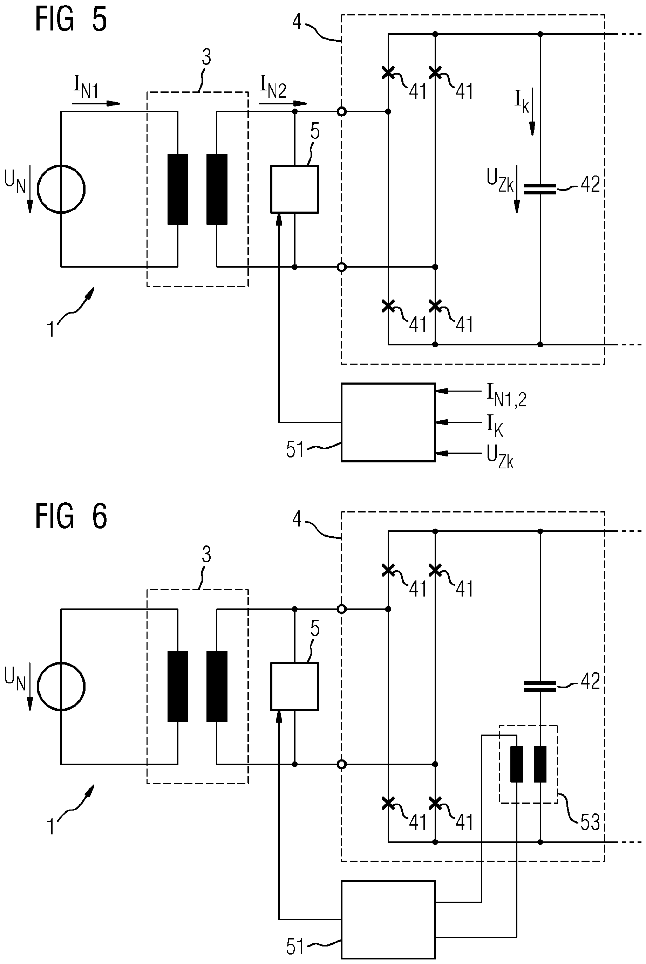

Dieses Ausführungsbeispiel, das den Bypassschalter aufweist, führt die Kurschlussströme an den sensitiven Komponenten wie beispielsweise den Halbleitern 41 vorbei und leitet diese in robuste unkritische Komponenten. Als Bypass eignen sich alle Schaltelemente, die in ausreichender kurzer Zeit einen Parallelpfad zu den sensitiven Komponenten realisieren können. Als Bypass-Elemente eignen sich antiparallel angeordnete Halbleiterbauelemente 52 wie in FIG 5 dargestellt (z.B. Thyristoren) oder mechanische Schaltelemente, wie beispielsweise mit einer Sprengladung kurzgeschlossene Kurzschlusskontakte.

Die Auslösung kann hierbei aktiv, wie in FIG 6 dargestellt, durch eine Steuervorrichtung 51 erfolgen. Dabei wird anhand von Messgrößen, die einen Kurzschluss erkennen, durch die Steuerung der Bypassschalter ausgelöst. Alternativ oder ergänzend kann die Auslösung auch passiv, direkt durch den Kurzschlussstrom erfolgen wie in FIG 6 dargestellt. Dabei wird mittels eines Messtransformators 53 wird der Fehlerfall erkannt und der Bypass ausgelöst, d.h. beispielsweise die Thyristoren gezündet. Alternativ zum Messtransformator kann jede beliebige induktive und/oder transformatorische Kopplung zum Einsatz kommen. Dabei kann es abhängig von den Belastungsgrenzen der Komponenten erforderlich sein, dass der Bypass bis zum Abklingen der Ausgleichsvorgänge im Leistungskreis sichergestellt werden muss. In diesem Fall ist es vorteilhaft, die Zündfähigkeit der Thyristoren durch einen Energiespeicher sicherzustellen. Die Energiespeicherung kann beispielsweise im Ansteuerkreis durch elektrische (Kondensatoren) oder chemische Energiespeicher (z.B. Batterien) erfolgen.

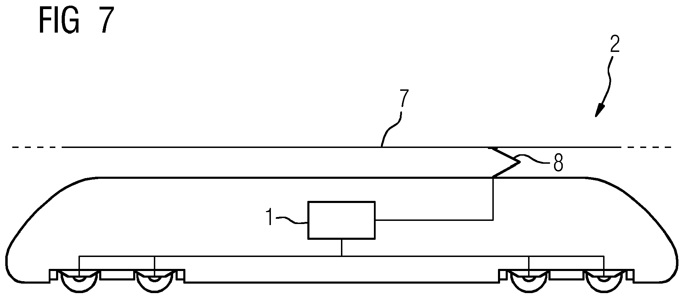

Die FIG 7 zeigt ein Schienenfahrzeug 2. Die elektrische Energie bezieht das Schienenfahrzeug aus einer Fahrleitung 7, die gegenüber dem Erdpotential eine Wechselspannung aufweist. Über einen Stromabnehmer 8 wird der Fahrleitung 7 elektrische Energie entnommen und dem Antriebssystem 1 zugeführt. Dieses verteilt die Energie an Motoren, die an den Rädern des Schienenfahrzeugs 2 angeordnet sind und das Schienenfahrzeug 2 antreiben.

Zusammenfassend betrifft die Erfindung ein Antriebssystem für ein Schienenfahrzeug aufweisend einen Transformator, einen netzseitigen Stromrichter mit Halbleitern und einem Zwischenkreis und eine Kurzschlussschutzvorrichtung, wobei die Kurzschlussschutzvorrichtung zwischen einer Sekundärseite des Transformators und dem netzseitigen Stromrichter angeordnet ist, wobei mittels der Kurzschlussschutzvorrichtung ein Kurzschlussstrom durch die Halbleiter des netzseitigen Stromrichters begrenzbar ist. Ferner betrifft die Erfindung ein Schienenfahrzeug mit einem derartigen Antriebssystem, wobei das Schienenfahrzeug für den Betrieb an einer Fahrleitung mit Wechselspannung ausgebildet ist. Die Erfindung betrifft weiter ein Verfahren zum Schutz eines derartigen Antriebssystems, wobei im Fehlerfall mittels der Kurzschlussschutzvorrichtung ein Kurzschlussstrom durch die Halbleiter des netzseitigen Stromrichters begrenzt wird.

Wechselspannung ausgebildet ist. Die Erfindung betrifft weiter ein Verfahren zum Schutz eines derartigen Antriebssystems, wobei im Fehlerfall mittels der Kurzschlussschutzvorrichtung ein Kurzschlussstrom durch die Halbleiter des netzseitigen Stromrichters begrenzt wird.

## Patentansprüche

1. Antriebssystem (1) für ein Schienenfahrzeug (2) aufweisend
- einen Transformator (3),
- einen netzseitigen Stromrichter (4) mit Halbleitern (41) und einem Zwischenkreis und
- eine Kurzschlussschutzvorrichtung (5),
wobei die Kurzschlussschutzvorrichtung (5) zwischen einer Sekundärseite (31) des Transformators (3) und dem netzseitigen Stromrichter (4) angeordnet ist, wobei mittels der Kurzschlussschutzvorrichtung (5) ein Kurzschlussstrom durch die Halbleiter (41) des netzseitigen Stromrichters (4) begrenzbar ist,
**dadurch gekennzeichnet, dass**
die Kurzschlussschutzvorrichtung (5) parallel zu der Sekundärseite (31) des Transformators (3) und dem netzseitigen Stromrichter (4) angeordnet ist, wobei im Kurzschlussfall durch die Kurzschlussschutzvorrichtung (5) die wechselspannungsseitigen Eingänge (43) des netzseitigen Stromrichters (4) kurzschließbar sind.

2. Antriebssystem (1) nach Anspruch 1, wobei die Halbleiter (41) des netzseitigen Stromrichters (4) Siliziumcarbid oder Galliumnitrit aufweisen.

3. Schienenfahrzeug (2) mit einem Antriebssystem (1) nach einem der Ansprüche 1 oder 2, wobei das Schienenfahrzeug (2) für den Betrieb an einer Fahrleitung (7) mit Wechselspannung ausgebildet ist.

4. Verfahren zum Schutz eines Antriebssystems (1) nach einem der Ansprüche 1 oder 2 oder eines Schienenfahrzeugs (2) nach Anspruch 3, **gekennzeichnet dadurch, dass** im Fehlerfall mittels der Kurzschlussschutzvorrichtung (5) ein Kurzschlussstrom durch die Halbleiter (41) des netzseitigen Stromrichters (4) begrenzt wird.

5. Verfahren nach Anspruch 4, wobei mittels der Kurzschlussschutzvorrichtung (5) die wechselspannungsseitigen Eingänge (43) des netzseitigen Stromrichters (4) miteinander elektrisch leitend verbunden werden.

## Claims

1. Drive system (1) for a rail vehicle (2) having
- a transformer (3),
- a network-side power converter (4) with semiconductors (41) and an intermediate circuit and
- a short-circuit protection apparatus (5),
wherein the short-circuit protection apparatus (5) is arranged between a secondary side (31) of the transformer (3) and the network-side power converter (4), wherein a short-circuit current through the semiconductors (41) of the network-side power converter (4) can be limited by means of the short-circuit protection apparatus (5),
**characterised in that**
the short-circuit protection apparatus (5) is arranged parallel to the secondary side (31) of the transformer (3) and the network-side power converter (4), wherein in the event of a short circuit the alternating voltage-side inputs (43) of the network-side power converter (4) can be short-circuited by means of the short-circuit protection apparatus (5).

2. Drive system (1) according to claim 1, wherein the semiconductors (41) of the network-side power converter (4) have silicon carbide or gallium nitride.

3. Rail vehicle (2) with a drive system (1) according to one of claims 1 or 2, wherein the rail vehicle (2) is embodied for operation on a contact wire (7) with alternating voltage.

4. Method for protecting a drive system (1) according to one of claims 1 or 2 or a rail vehicle (2) according to claim 3, **characterised in that** in the event of a fault, a short-circuit current through the semiconductors (41) of the network-side power converter (4) is limited by means of the short-circuit protection apparatus (5).

5. Method according to claim 4, wherein the alternating voltage-side inputs (43) of the network-side power converter (4) are connected to one another in an electrically conducting manner by means of the short-circuit protection apparatus (5).

## Revendications

1. Système (1) d'entraînement d'un véhicule (2) ferroviaire comportant
- un transformateur (3),
- un redresseur (4) du côté du réseau ayant des semiconducteurs (41) et un circuit intermédiaire et
- un dispositif (5) de protection vis-à-vis d'un court-circuit, dans lequel le dispositif (5) de protection vis-à-vis d'un court-circuit est monté entre un côté (31) secondaire du transformateur (3) et le redresseur (4) du côté du réseau, dans lequel, au moyen du dispositif (5) de protection vis-à-vis d'un court-circuit, un courant de court-circuit dans les semiconducteurs (41) du redresseur (4) du côté du réseau peut être limité,
**caractérisé en ce que**
le dispositif (5) de protection vis-à-vis d'un court-circuit est monté en parallèle avec le côté (31) secondaire du transformateur (3) et le redresseur (4) du côté du réseau, dans lequel, dans le cas d'un court-circuit, par le dispositif (5) de protection vis-à-vis d'un court-circuit, les entrées (43), du côté de la tension alternative, du redresseur (4) du côté du réseau peuvent être court-circuitées.

2. Système (1) d'entraînement suivant la revendication 1, dans lequel les semiconducteurs (41) du redresseur (4) du côté du réseau comportent du carbure de silicium ou du nitrure de gallium.

3. Véhicule (2) ferroviaire comprenant un système (1) d'entraînement suivant l'une des revendications 1 ou 2, dans lequel le véhicule (2) ferroviaire est constitué pour fonctionner sur une caténaire (7) à tension alternative.

4. Procédé de protection d'un système (1) d'entraînement suivant l'une des revendications 1 ou 2 ou d'un véhicule (2) ferroviaire suivant la revendication 3, **caractérisé en ce que**, en cas de défaut, on limite, au moyen du dispositif (5) de protection vis-à-vis d'un court-circuit, un courant de court-circuit dans les semiconducteurs (41) du redresseur (4) du côté du réseau.

5. Procédé suivant la revendication 4, dans lequel, au moyen du dispositif (5) de protection vis-à-vis d'un court-circuit, on relie entre elles, d'une manière conductrice de l'électricité, les entrées (43), du côté de la tension alternative, du redresseur (4) du côté du réseau.
